# EUROPÄISCHE PATENTSCHRIFT

(11) **EP 0 643 175 B1**
(45) Veröffentlichungstag und Bekanntmachung des Hinweises auf die Patenterteilung: **10.09.1997**
(21) Anmeldenummer: 94104672.4
(22) Anmeldetag: 24.03.1994
(51) Int. Cl.: E03C 1/10, F16K 15/14

(54) **Sanitäre Sicherungseinrichtung zum Verhindern des Zurückfliessens von Wasser**
Sanitary protection device to prevent the backflow of water
Dispositif de protection sanitaire empêchant le reflux d'eau

(30) Priorität: 17.08.1993 CH 2446/93
(43) Veröffentlichungstag der Anmeldung: 15.03.1995
(73) Patentinhaber: KWC AG, CH-5726 Unterkulm (CH)
(72) Erfinder: Hochstrasser, Ferdinand, CH-5105 Auenstein (CH)
(74) Vertreter: Patentanwälte Schaad, Balass, Menzl & Partner AG

(56) Entgegenhaltungen:
- EP-A- 0 284 805
- EP-A- 0 294 549
- EP-A- 0 432 553
- DE-A- 3 832 998
- DE-B- 1 011 732
- DE-U- 9 113 239

## Beschreibung

Die vorliegende Erfindung betrifft eine sanitäre Sicherungseinrichtung, insbesondere für eine Sanitärarmatur, zum Verhindern des Zurückfliessens von Wasser in eine Speiseleitung, gemäss dem Oberbegriff des Anspruchs 1.

Sicherungseinrichtungen dieser Art sind aus der Patentschrift DE-A-38 32 998 bekannt. Sie sind vorgesehen, bei Klosettspüleinrichtungen zwischen dem Spülhahn und dem zum Klosett führenden Spülrohr eingebaut zu werden. Ihr Einbau erfolgt in vertikaler Richtung und in einem erheblichen Vertikalabstand oberhalb des in der Klosettschüssel eventuell vorhandene Schmutzwasser das zurückgesaugt werden könnte. Bei derartigen Spüleinrichtungen besteht somit, bei geringen speiseseitigen Unterdrücken, keine Gefahr, dass Schmutzwasser in die Speiseleitung gelangt. Die bekannten Sicherungseinrichtungen müssen deshalb erst bei erheblichem speiseseitigen Unterdruck zuverlässig funktionieren.

Die aus der genannten Schrift bekannten Sicherungseinrichtungen weisen einen im Innern eines rohrartigen Gehäuses angeordneten hülsenförmigen Ventilkörper aus gummielastischem Material auf, der mit seinem einlasseitigen Befestigungsende an einem Innenflansch des Gehäuses befestigt ist. Der Ventilkörper umgreift ein glockenförmig ausgebildetes, dünnwandiges Ventilsitzelement, dessen dem Einlass des Gehäuses zugewandter Bodenbereich an einem stegartigen Tragorgan befestigt ist, das seinerseits gehäusefest abgestützt ist. Das Ventilsitzelement wirkt mit seinem stromabwärtsgelegenen Flankenendbereich mit einem glockenartig aufgeweiteten, vom Befestigungsende entfernten freien Endabschnitt des Ventilkörpers zusammen, wobei das Bord des Ventilsitzelements gegenüber dem freien Ende des Ventilkörpers zurückversetzt ist. Das Gehäuse weist einen zweiten Innenflansch auf, der dazu bestimmt ist, mit der Aussenseite des Endabschnitts des Ventilkörpers bei durch diesen fliessendem Wasser zusammenzuwirken, um die in Strömungsrichtung des Wassers gesehen oberhalb des zweiten Innenflansches vorhandenen, mit der Umgebungsluft verbundenen Belüftungsöffnungen von der Auslassöffnung des Gehäuses abzutrennen. Strömt kein Wasser durch die Sicherungseinrichtung und herrscht einlasseitig kein Unterdruck liegt das Ventilsitzelement am Ventilkörper an und zwischen diesem und dem zweiten Innenflansch ist ein ringartiger Belüftungsspalt vorhanden, welcher die Belüftungsöffnungen mit der Auslassöffnung strömungsmässig verbindet. Unter diesen Verhältnissen ist die Auslassöffnung somit belüftet. Bei Wasserfluss dehnt sich unter dem Druck des Wassers einerseits der Ventilkörper aus und legt sich mit seinem Endabschnitt am zweiten Innenflansch an und andererseits wird das Ventilsitzelement in Strömungsrichtung und in radialer Richtung gegen einwärts gebogen, was zwangsweise zu Faltungen bzw. Knickbildung im Ventilsitzelement führt. Bei speiseseitigem Unterdruck werden der Ventilkörper und das Ventilsitzelement infolge des Drücksaugdrucks aneinander gepresst, wobei der Rinnspalt zwischen dem Ventilkörper und dem Innenflansch des Gehäuses offen bleibt, um die Auslassöffnung zu belüften.

Diese bekannten Sicherungseinrichtungen sind für die zum Spülen von Klosetts notwendigen grossen Durchflussmengen pro Zeiteinheit ausgelegt, dürften aber bei nur kleinen durchströmenden Wassermengen kein sicheres Betriebsverhalten aufweisen und für andere Zwecke als die Verwendung in Klosettspüleinrichtungen nicht geeignet sein. Da das Dehnen des Ventilkörpers mehr Kraft erfordern dürfte als das einwärts Falten des dünnwandigen Ventilsitzelements, ist bei kleinen Durchflussmengen nicht sichergestellt, dass sich der Ventilkörper mit seinem Endabschnitt am zweiten Innenflansch des Gehäuses anlegt. Es besteht deshalb unter diesen Betriebsbedingungen, falls sich auslasseitig Wasser zurückstauen könnte, die Gefahr, dass dieses durch die Belüftungsöffnungen austreten kann. Weiter darf der Ventilkörper nicht unter Vorspannung am Ventilsitzelement anliegen, weil dann nicht mehr gewährleistet wäre, dass sich das durch strömendes Wasser einwärtsgefaltete Ventilsitzelement, nach dem Unterbrechen des Wasserflusses, wieder satt an den Ventilkörper anlegt, weil das gefaltete Ventilsitzelement die Kraft nicht aufbringen kann den Ventilkörper entsprechend zu dehnen. Weiter sind die bekannten Sicherungseinrichtungen beispielsweise nicht geeignet, bei Schlauchbrausearmaturen eingesetzt zu werden, da dort bei unterbrochenem Wasserfluss im Brauseschlauch gefangenes Wasser, bei Anheben der Brause, durch die Belüftungsöffnungen austreten kann, das insbesondere bei derartigen Kücharmaturen nicht zulässig ist.

Es ist deshalb eine Aufgabe der vorliegenden Erfindung eine gattungsmässige Sicherungseinrichtung zu schaffen, die universal einsetzbar ist und unter allen Betriebsbedingungen zuverlässig sicher funktioniert.

Diese Aufgabe wird durch eine Sicherungseinrichtung gelöst, die die Merkmale im Anspruch 1 aufweist.

Da der Ventilkörper im Ruhezustand, d.h. bei einlasseitigem und auslasseitigem gleichen Druck am Belüftungsventilsitz anliegt und somit die Belüftungsöffnungen von der Auslassöffnung abtrennt, ist selbst dann das Ausfliessen von Wasser durch die Belüftungsöffnung verhindert, wenn der von der Speiseleitung herkommende Wasserfluss unterbrochen ist. Da das Ventilsitzelement falt- und knickfest ausgebildet ist und der Ventilkörper an diesem unter Vorspannung manschettenartig anliegt, ist es bei von der Speiseleitung herkommenden Wasserfluss, und ist er noch so klein, immer notwendig, dass sich das Ventilsitzelement ausdehnt um den Wasserfluss zwischen sich und dem Ventilsitzelement freizugeben. Im vom Ventilkörper umschlossenen Strömungskanal stromaufwärts des Ventilsitzelements ist somit bei Wasserfluss der Druck immer grösser als in Strömungsrichtung unterhalb des Ventilsitzelements, weshalb auch unter diesen Bedingungen immer sichgestellt ist, dass der Ventilkörper am Belüftungsventilsitz anliegt und das Ausfliessen von Wasser durch die Belüftungsöffnung verhindert. Dass aber der Ventilkörper sich, selbst bei geringem, speiseseitigem Unterdruck sofort vom Belüftungsventilsitz abhebt und das Belüften der Auslassöffnung ermöglicht, ist durch eine umlaufende Sicke gewährleistet. Diese ermöglicht das Zusammenziehen des Ventilkörpers in radialer Richtung ohne dass er sich dabei in axialer Richtung dehnen muss. Die Längenkompensation erfolgt mit äusserst geringem Kraftaufwand durch die Sicke.

Bei einer besonders bevorzugten Ausbildungsform gemäss Anspruch 2 ist die Gefahr gemildert, dass sich bei von der Auslasseite her einströmendem Wasser der Ventilkörper vom Ventilsitzelement abschälen kann.

Eine weitere bevorzugte Ausbildungsform gemäss Anspruch 3 gewährt ein zuverlässig sicheres Funktionieren, selbst wenn ein Fremdkörper zwischen das Ventilsitzelement und den Ventilkörper gelangen sollte. Die Vorspannung des Ventilkörpers und insbesondere die dichtlippenartige Ausbildung des Ventilkörpers und des Ventilsitzelements sorgen dafür, dass der Fremdkörper dicht umschlossen ist.

Die ebenfalls bevorzugten Ausbildungsformen der erfindungsgemässen Sicherungseinrichtung gemäss den Ansprüchen 4 - 6 gewähren einen besonders einfachen Aufbau und ermöglichen eine äusserst einfache Montage.

Eine weitere vorteilhafte Ausbildungsform gemäss den Ansprüchen 7 bis 10 ermöglicht eine schonende Abstützung des Ventilkörpers 40 bei Wasserzufuhr unter hohem Druck. Die Anordnung einer Stütz- und Haltehülse sorgt dafür, dass die radiale Aufweitung des Ventilkörpers begrenzt ist, und die Gefahr der Ventilkörperbeschädigung eliminiert wird. Ausserdem kann ebenfalls eine besonders einfache Montage realisiert werden.

Besonders bevorzugte Sanitärarmaturen mit einer erfindungsgemässen Sicherungseinrichtung sind in den Ansprüchen 11 und 12 definiert.

Die Erfindung wird nun anhand von in den Figuren gezeigten Ausführungsbeispielen näher beschrieben. Es zeigen rein schematisch:
- Figuren 1 und 2: in Draufsicht bzw. in einem Längsschnitt eine erste Ausbildungsform der erfindungsgemässen Sicherungseinrichtung;
- Figur 3: in einem Längsschnitt eine zweite Ausbildungsform der erfindungsgemässen Sicherungseinrichtung;
- Figur 4: teilweise geschnitten eine sanitäre Brausenarmatur mit einer erfindungsgemässen Sicherungseinrichtung; und
- Figur 5: in einem Längsschnitt eine dritte Ausbildungsform der erfindungsgemässen Sicherungseinrichtung, eingebaut in die sanitäre Brausenarmatur nach Fig.4.

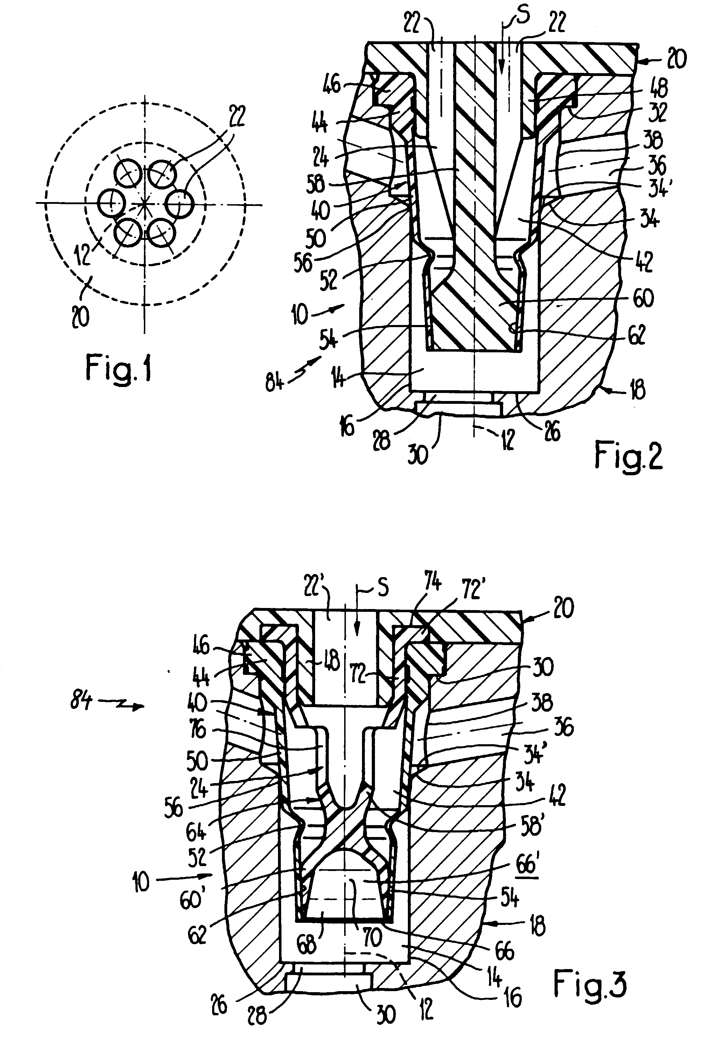

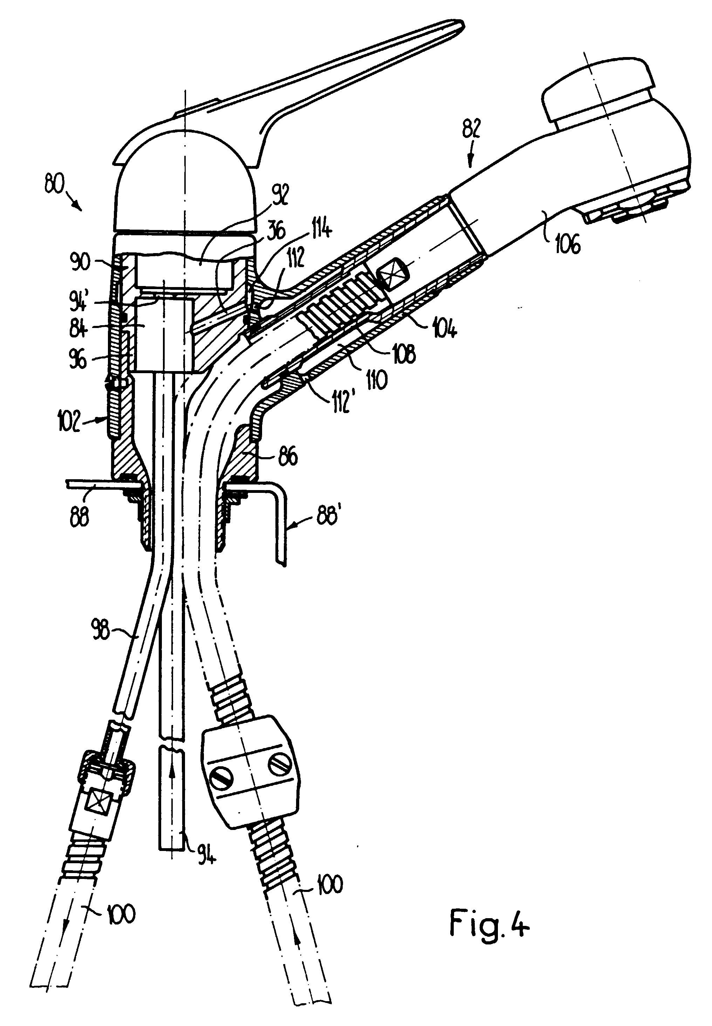

Die in den Figuren 1 und 2 gezeigte Sicherungseinrichtung weist ein Gehäuse 10 auf, das einen zu einer Achse 12 im wesentlichen rotationssymmetrischen Ventilraum 14 umschliesst. Dieser ist durch eine sacklochartige Ausnehmung 16 in einem Gehäusekörper 18 gebildet, die von einem Deckelelement 20 überspannt ist. Das Deckelelement 20 weist mehrere in Richtung der Achse 12 verlaufende und kreisartig um die Achse 12 angeordnete Durchgangslöcher 22 auf, die eine Einlassöffnung 24 des Ventilraums 14 bilden. Die Einlassöffnung 24 ist dazu bestimmt, wie es weiter unten im Zusammenhang mit der Fig. 4 zu beschreiben ist, mit einer Speiseleitung verbunden zu werden. Im dem Deckelelement 20 gegenüberliegenden Boden 26 der Ausnehmung 16 ist eine Auslassöffnung 28 vorhanden, an den ein Ausströmkanal 30 anschliesst, der in einem Wasserabfluss, beispielsweise in Form eines Perlators oder eines Brausekopfs, endet. Vom Deckelelement 20 hergesehen, weist die Ausnehmung 16 eine erste stufenartige Verengung 32 und von dieser in axialer Richtung beabstanded eine zweite stufenartige Verengung 34 auf. Zwischen diesen beiden Verengungen 32, 34 münden im Gehäusekörper 18 ausgebildete Belüftungskanäle 36 in die Ausnehmung 16. Diese sind mit der Umgebungsluft verbunden und ihre Mündungen in die Ausnehmung 16 bilden eine Belüftungsöffnung 38 des Ventilraums 14.

Im Ventilraum 14 ist ein zur Achse 12 rotationssymmetrischer, hülsenartiger Ventilkörper 40 aus gummielastischem Material vorhanden, der einen mit 42 bezeichneten Strömungskanal umschliesst. An seinem einlasseitigem, dem Deckelelement 20 zugewandten Befestigungsende 44 weist der Ventilkörper 40 einen, in radialer Richtung gegen aussen vorstehenden Befestigungswulst 46 auf, welcher zum Befestigen des Ventilkörpers 40 zwischen der Schulter der ersten Verengung 32 und dem Deckelelement 20 eingeklemmt gehalten ist. Weiter weist das Deckelelement 20 einen in den Ventilkörper 40 eingreifenden Zapfenteil 48 auf, durch den hindurch die Durchgangslöcher 22 in den Strömungskanal 42 verlaufen und der ein Herausgleiten des Befestigungswulstes 46 aus der vom Gehäusekörper 18 und dem Deckelelement 20 gebildeten Befestigungsnut verhindert.

An den Befestigungswulst 46 schliesst ein dünnwandiger, in Strömungsrichtung S gesehen, sich konisch verjüngender Mittelabschnitt 50 an, der die Belüftungsöffnung 38 überspannt und, in Strömungsrichtung S gesehen, unterhalb der zweiten Verengung 34 durch eine umlaufende, einwärtsgerichtete Sicke 52 begrenzt ist. An die Sicke 52 schliesst stromabwärts ein ebenfalls sich konisch verjüngender, dünnwandiger, freiendender Endabschnitt 54 an.

Der Ventilkörper 40 ist derart ausgebildet, dass er mit seinem Mittelabschnitt 50 im montierten Zustand am Gehäusekörper 18 in einem, an die die zweite Verengung 34 bildende Schulter 34' anschliessenden, umlaufenden Bereich anliegt. Dieser Bereich bildet einen mit dem Ventilkörper 40 zusammenwirkenden Belüftungsventilsitz 56.

An den Zapfenteil 48 des Deckelelements 20 ist ein schaftartiger Halteteil 58 angeformt, der in radialem Abstand zum Mittelabschnitt 50 und der Sicke 52 des Ventilkörpers 40 sich im Ausströmkanal 30 bis in den Endabschnitt 54 des Ventilkörpers 40 erstreckt und dort zu einem Ventilsitzelement 60 aufgeweitet ist. Dieses weist eine sich, in Strömungsrichtung S, gesehen konisch verjüngende Mantelfläche 62 auf, an der der Ventilkörper 40 mit seinem Endabschnitt 54 unter Vorspannung anliegt. Diese Vorspannung wird infolge der Federeigenschaften des gummielastischen Materials des Ventilkörpers 40 erzeugt, dessen Endabschnitt 54 durch das Ventilsitzelement 60 in Umfangsrichtung gedehnt gehalten ist. Da das Ventilsitzelement 60 vollkörperartig ausgebildet ist, kann es nicht einfalten oder einknicken.

Der vollständigkeitshalber sei erwähnt, dass der Ventilkörper 40 beim freien Ende des Ventilsitzelements 60 endet und dass dieses Ende in axialer Richtung vom Boden 26 beabstandet ist. Weiter ist zwischen dem Gehäusekörper 18 und dem Endabschnitt 54 ein radialer Abstand vorhanden, damit sich letzterer bei in Strömungsrichtung S fliessendem Wasser ausdehnen und vom Ventilsitzelement 60 abheben kann.

Die in der Fig. 3 gezeigte Sicherungseinrichtung entspricht im wesentlichen jener in den Figuren 1 und 2 gezeigten und weiter oben beschriebenen Ausbildungsform. Identische und gleichwirkende Teile sind in der Fig. 3 mit gleichem Bezugszeichen bezeichnet wie in den Figuren 1 und 2. Im folgenden werden deshalb nur noch die bei der Ausführungsform gemäss Fig. 3 vorhandenen Unterschiede zur weiter oben beschriebenen Ausführungsform dargelegt. Das einstückige, den Halteteil 58' und das Ventilsitzelement 60' bildende Bauteil 64 ist aus einem gummielastischem Material hergestellt. Das Ventilsitzelement 60', dessen Aussenkontur, insbesondere im Bereich der Mantelfläche 62, jener des Ventilsitzelements 60 entspricht, weist auf der freien Stirnseite 66 eine Vertiefung 66' auf, so dass der freie Randabschnitt des Ventilsitzelements 60' eine weiche Dichtlippe 68 bildet. An die Dichtlippe 68 schliesst ein Stützabschnitt 70 an, der infolge der grösser dimensionierten Wandstärke unter in sanitären Anlagen üblichen Drücken falt- und knickfest ausgebildet ist. Auch hier liegt der Ventilkörper 40 mit seinem Endabschnitt 54 unter Vorspannung an der, am Stützabschnitt 70 und an der Dichtlippe 68, angeformten Mantelfläche 62 an.

Der, entgegen der Strömungsrichtung S, an das Ventilsitzelement 60' anschliessende Halteteil 58' ist im wesentlichen rohrartig ausgebildet und erweitert sich konisch bis zum Zapfenteil 48 des Deckelelements 20 hin, welches in einen zylinderischen Halteabschnitt 72 des Halteteils 58' eingreift. Am deckelseitigen Ende ist am Halteabschnitt 72 ein Aussenflansch 72' angeformt, der das Befestigungsende 44 des Ventilkörpers 40 hintergreift und in einer entsprechenden, ringartigen, den Zapfenteil 48 umgreifende Haltenut 74 im Deckelelement 20 gehalten ist. Das Befestigungsende 44 mit dem Befestigungswulst 46 ist durch den Zapfenteil 48 und den dazwischen angeordneten Halteabschnitt 72 mit dem Aussenflansch 72' am Herausgleiten aus der L-förmigen Befestigungsnut gehindert.

Das Deckelelement 20 weist ein zur Achse 12 zentrisches Durchgangsloch 22' auf, das in den Innenraum des Halteteils 58' mündet, welcher seinerseits über Durchlassöffnungen 76 in der Wand des Halteteils 58' mit dem Strömungskanal 42 des Ventilkörpers 40 verbunden ist. Diese Durchlassöffnungen 76 bilden die Einlassöffnung 24 des Ventilraums 14.

Die in den Figuren 1 - 3 gezeigten Sicherungseinrichtungen funktionieren wie folgt: Herrscht einlasseitig und auslasseitig der Sicherungseinrichtung gleicher Druck, dieser entspricht üblicherweise dem Umgebungsdruck, liegt der Ventilkörper 40 mit einer gewissen Vorspannung am Belüftungsventilsitz 56 des Gehäusekörpers 18 an, wodurch die Belüftungsöffnung 38 von der Auslassöffnung 28 abgetrennt ist. Das Anliegen erfolgt unter einer gewissen Vorspannung, da der Mittelabschnitt 50 durch den Belüftungsventilsitz 56 geringfügig in radialer Richtung nach einwärts gedrückt wird. Weiter liegt der Endabschnitt 54 des Ventilkörpers 40 unter Vorspannung am Ventilsitzelement 60, 60' an. Eventuell durch die Auslassöffnung 28 in den Ventilraum 14 rückströmendes Wasser, beispielsweise infolge des Anhebens eines Brausekopfs, der über einen Schlauch mit der Auslassöffnung 28 des Ventilraums 14 verbunden ist, über die Sicherungseinrichtung, kann somit nicht durch die Belüftungsöffnung 38 und den anschliessenden Belüftungskanal 36 auslaufen. Diese Eigenschaft wird weiter durch meistens im Strömungskanal 42 des Ventilkörpers 40 vorhandenes Wasser unterstützt, welches infolge eines vorgeschalteten, geschlossenen Ventils nicht zurückfliessen kann.

Ist ein Wasserfluss in Strömungsrichtung S vorhanden, steigt im Strömungskanal 42 der Druck an, bis der Endabschnitt 54 des Ventilkörpers 40 sich dehnt und vom Ventilsitzelement 60, 60' abhebt um das Wasser zur Auslassöffnung 28 und den anschliessenden Ausströmkanal 30 fliessen zu lassen. Da bei strömendem Wassers im Strömungskanal 42 immer ein höherer Druck vorhanden ist als stromabwärts des Ventilsitzelements 60, 60', ist die Kraft, mit welcher der Mittelabschnitt 50 des Ventilkörpers 40 gegen den Belüftungsventilsitz 56 gedrückt wird, immer grösser, als die Kraft die versucht den Mittelabschnitt 50 vom Belüftungsventilsitz 56 abzuheben. Unter Wasserflussbedingungen ist somit auch sicher gewährleistet, dass kein Wasser durch die Belüftungsöffnung 38 ausströmen kann.

Baut sich nun einlasseitig der Sicherungseinrichtung Unterdruck auf, was beispielsweise bei Bruch einer Leitung des Speisewassernetzes vorkommen kann, wird infolge dieses Unterdrucks gegenüber Umgebungsdruck der Mittelabschnitt 50 des Ventilkörpers 40 zusammengezogen, welcher sich nach einwärts beugt und somit vom Belüftungsventilsitz 56 abhebt. Dadurch wird die Auslassöffnung 28 mit der Belüftungsöffnung 38 verbunden. Der Ausströmkanal 30 ist dadurch belüftet. Das Einwärtsbiegen des Mittelabschnitts 50 benötigt wenig Kraft, da sich dieser in axialer Richtung gesehen nicht dehnen muss und die Sicke 52 praktisch kraftlos dessen Längenänderung aufnimmt. Die Sicke 52 wird einfach leicht gestreckt. Die Vorspannung mit welcher der Endabschnitt 54 das Ventilsitzelement 60, 60' umgreift verhindert, dass Wasser von der Auslassöffnung 28 in den Strömungskanal 42 eindringen kann und gleichzeitig, dass der Ventilkörper 40 fest am Ventilsitzelement 60, 60' gehalten ist.

Fig. 4 zeigt als Beispiel eine Sanitärarmatur 80 mit einer Schlauchbrause 82 und eine dieser vorgeschaltete Sicherungseinrichtung 84, wie sie weiter oben beschrieben ist. Ein Gehäuseunterteil 86 der Sanitärarmatur 80 ist am Rand 88 eines Spülbeckens 88' befestigt. Der Gehäuseunterteil 86 trägt einen Gehäuseoberteil 90 in dem eine allgemein bekannte Einhebelmischpatrone 92 angeordnet ist. Diese ist an eine Warmwasser- und eine Kaltwasser-Speiseleitung 94 angeschlossen, von welchen nur eine in der Fig. 4 sichtbar ist. Mit der Einhebelmischpatrone 92 wird sowohl die Wassermenge als auch die Mischwassertemperatur eingestellt. Das Wasser gelangt durch einen am Gehäuseoberteil 90 ausgebildeten Speiseleitungskanal 94' in eine gegen unten offene Gehäuseausnehmung 96. In diese ist eine Sicherungseinrichtung 84 als Baugruppe eingesetzt und dort festgehalten.

Durch den Gehäuseoberteil 90 verläuft der Belüftungskanal 36, der mit der Belüftungsöffnung 38 des Ventilraums 14 strömungsverbunden ist. An die Auslassöffnung 28 schliesst ein den Gehäuseunterteil 86 durchgreifendes Auslassrohr 98 an, an welchem unterhalb des Rands 88 des Spülbeckens 88' der Schlauch 100 der Schlauchbrause 82 befestigt ist. Am Gehäuseunterteil 86 und Gehäuseoberteil 90 ist ein Mantelelement 102 schwenkbar gelagert, von dem ein Stutzen 104 absteht, durch welchen hindurch der unter dem Spülbecken 88' eine Vorratsschlaufe bildende Schlauch 100 zum Brausekopf 106 verläuft. Der Brausekopf 106 kann aus dem Stutzen 104 für Spülzwecke herausgezogen werden.

In den Stutzen 104 ist eine Hülse 108 eingesetzt, die zwischen sich und dem Stutzen 104 einen Ringraum 110 begrenzt, der einerseits über ein Loch 112 und eine Umfangsnut 114 in allen Drehlagen des Mantelelements 102 mit dem Belüftungskanal 36 und andererseits über ein Loch 112' mit der Umgebungsluft verbunden ist.

Insbesondere bei derartigen Sanitärarmaturen besteht die Möglichkeit, dass der Brausekopf 106 in im Spülbecken 88' vorhandenem Schmutzwasser eingetaucht ist und bei offener Einhebelmischpatrone 92 in der Speiseleitung 94 ein Unterdruck, beispielsweise infolge Rohrbruchs, aufgebaut wird. Die Sicherungseinrichtung 84 verhindert dabei, dass Schmutzwasser in die Speiseleitung 94 zurückgesaugt werden kann und belüftet unter Rücksaugbedingungen gleichzeitig den an die Auslassöffnung 28 anschliessenden Ausströmkanal 30 der im vorliegenden Fall durch das Auslassrohr 98 und den Schlauch 100 gebildet ist.

Weiter bleibt bei derartigen Armaturen in der Vorratsschlaufe des Schlauches 100 eine Wassersäule liegen, wenn mittels der Einhebelmischpatrone 92 der Wasserfluss unterbrochen wird. Wird nun der Brausekopf 106 aus dem Stutzen 104 gezogen und angehoben drückt die Wassersäule gegen die Sicherungseinrichtung 84. Diese verhindert auch unter diesen Bedingungen ein Auslaufen dieses Wassers durch den Belüftungskanal 36.

Besonders einfach wird der Aufbau der Sanitärarmatur wenn die Gehäuseausnehmung 96 direkt den Ventilraum 14 bildet.

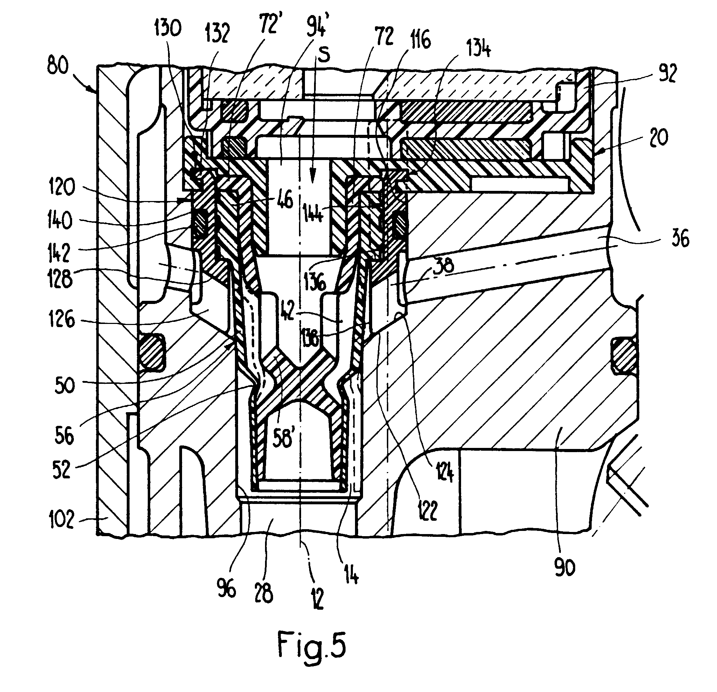

In Fig.5 ist eine weitere Ausbildungsform der erfindungsgemässen Sicherungseinrichtung dargestellt. Als Beispiel wird ein Einbau einer solchen Sicherungseinrichtung in die aus Fig.4 bekannte Sanitärarmatur 80 dargestellt und im folgenden näher beschrieben; einem Einbau in eine andere Sanitäranlage ( in ein in Fig.1 und 2 generell als 10 bezeichnetes Gehäuse ) steht selbstverständlich nichts im Wege.

Die aus Fig.1 bis 4 bereits bekannten, identischen und gleichwirkenden Teile sind wiederum mit gleichen Bezugsziffern bezeichnet.

Gemäss Fig.5 ist in einem der Speiseleitung zugewandten Teil 116 der Gehäuseausnehmung 96 im Gehäuseoberteil 90 eine Stütz- und Haltehülse 120 eingesetzt. Die Stütz- und Haltehülse 120 ist mittels eines Bajonettverschlusses 130 mit dem Deckelelement 20 verbunden. Die Bajonettsegmente der Stütz- und Haltehülse 120 sind in Fig.5 mit 132 bezeichnet, das Deckelelement 20 ist mit einer entsprechenden Rille 134 ausgestattet. Die Stütz- und Haltehülse 120 weist eine untere, der Auslassöffnung 28 zugewandte, konische Stirnfläche 122 auf, die einer entsprechenden konischen Absatzfläche 124 der Gehäuseausnehmung 96 zugeordnet ist. Die Absatzfläche 124 entspricht in ihrer Anordnung der zweiten Verengung 34 nach Fig.1 und 2. Die Stirnfläche 122 ist mit einer Anzahl von gleichmässig am Umfang verteilten, radial gerichteten Schlitzen 126 versehen, deren Boden 128 parallel zur Stirnfläche 122, d.h. ebenfalls konisch gestaltet ist. Eine den Mittelabschnitt 50 des Ventilkörpers 40 umgebende, innere Umfangsfläche der Stütz- und Haltehülse 120 ist mit 138 bezeichnet. Die Schlitze 126 befinden sich im Bereich der Belüftungsöffnungen 38 bzw. der Belüftungskanäle 36.

Der Ventilkörper 40 ist mit seinem Befestigungswulst 46 zusammen mit dem Aussenflansch 72' des rohrartigen Halteteils 58' zwischen einem inneren Absatz 136 der Stütz- und Haltehülse 120 und dem mit dem Zapfenteil 48 versehenen Deckelelement 20 festgeklemmt. Dabei bildet der Befestigungswulst 46 gleichzeitig eine einer inneren Umfangsfläche 144 der Stütz- und Haltehülse 120 einerseits und dem zylindrischen Halteabschnitt 72 des Halteteils 58' anderseits zugeordnete Dichtung. Am Umfang ist die Stütz- und Haltehülse 120 mit einer Nut 140 versehen, in der eine Dichtung 142 angeordnet ist.

Sowohl die Dichtung 142 als auch die dichtende Anordnung des Befestigungswulstes 46 sorgen dafür, dass kein Speiseleitungswasser nach aussen und in die Belüftungskanäle 36 gelangen kann.

Bei der in Fig.5 dargestellten Ausbildungsform wird bei starkem Wasserstrom bzw. bei Wasserzufuhr unter hohem Druck die radiale Aufweitung des Mittelabschnitts 50 nach aussen, die auch zu axialen Veränderungen und einer eventuellen Scheuerung im Bereich des Belüftungsventilsitzes 56 führen kann, durch die Umfangsfläche 138 der Stütz- und Haltehülse 120 begrenzt. Der Mittelabschnitt 50 kann auch nicht bis in die Belüftungsöffnungen 38 eingedrückt werden, wo er ebenfalls eventuellen Beschädigungen ausgesetzt werden könnte. Der Mittelabschnitt 50 des Ventilkörpers 40 wird bei radialem Aufweiten schonend an der Umfangsfläche 138 abgestützt, und die Beschädigungsgefahr wird eliminiert. In der rechten Hälfte der Fig.5 ist die maximal mögliche Aufweitung des Ventilkörpers 40 beim Überdruck im Strömungskanal 42 gestrichelt dargestellt. Dabei ist zu sehen, dass die radiale Aufweitung des unteren Endabschnitts 54 durch die innere Umfangsfläche der Gehäuseausnehmung 96 begrenzt ist.

Im Falle eines starken einlasseitigen Unterdrucks, beispielsweise beim Speiseleitungsbruch, kann der Ventilkörper 40 im extremen Fall die in der linken Hälfte der Fig.5 gestrichelt dargestellte Stellung annehmen. Dabei würde der Mittelabschnitt 50 am Halteteil 58' zur Anlage kommen. Bei kleineren Unterdrücken zieht sich jedoch der Ventilkörper 40 lediglich leicht einwärts zusammen, wie bereits beschrieben wurde, ohne in die extreme Stellung zu gelangen. Durch Vorhandensein der Schlitze 126 wird bei jedem Unterdruck eine einwandfreie Belüftung des Ausstromkanals 30 gewährleistet.

Die Verwendung des Bajonettverschlusses 130 ermöglicht eine besonders einfache Montage der den Ventilkörper 40 sowie den Halteteil 58' aufnehmenden Stütz- und Haltehülse 120 im Deckelelement 20. Eine andere lösbare Verbindungsform wäre allerdings durchaus möglich.

Bei allen Ausführungsformen der erfindungsgemässen Sicherungseinrichtung können anstelle der einzigen Sicke 52 auch mehrere aufeinanderfolgende Sicken vorhanden sein, so dass der Ventilkörper zwischen dem Mittelabschnitt 50 und dem Endabschnitt 54 einen balgartigen Abschnitt aufweist.

Die Mantelfläche 62 des Ventilsitzelements 60, 60' sowie der Endabschnitt 54 des Ventilkörpers können auch Zylinderform aufweisen.

Selbstverständlich ist es auch möglich, die Sicherungseinrichtung in eine Leitung, beispielsweise zwischen das Auslassrohr 98 und den Schlauch 100, einzubauen.

## Patentansprüche

1. Sanitäre Sicherungseinrichtung, insbesondere für eine Sanitärarmatur, zum Verhindern des Zurückfliessens von Wasser in eine Speiseleitung, mit
- einem von einem Gehäuse (10) umschlossenen Ventilraum (14), der eine zum Verbinden mit der Speiseleitung (94) bestimmte Einlassöffnung (24), eine Auslassöffnung (28) und eine Belüftungsöffnung (38) aufweist,
- einem im Ventilraum (14) angeordneten hülsenförmigen Ventilkörper (40) aus gummielastischem Material, der einen mit der Einlassöffnung (24) verbundenen Strömungskanal (42) umschliesst und mit seinem Befestigungsende (44) am Gehäuse (10) dicht befestigt ist,
- einem gehäusefest angeordneten Ventilsitzelement (60,60'), das vom Ventilköper (40) mit dessen vom Befestigungsende (44) entfernten freien Endabschnitt (54) manschettenartig umgriffen ist und an dem der Ventilkörper (40) mit dem Endabschnitt (54) bei unterbrochenem Wasserfluss und bei einlasseitigen Unterdruck anliegt, und von dem der Ventilkörper (40) bei Wasserfluss beabstandet ist, und
- einem gehäusefesten Belüftungsventilsitz (56), an dem der Ventilkörper (40) mit seiner äusseren Mantelfläche bei Wasserfluss anliegt, um das Ausfliessen von Wasser durch die Belüftungsöffnung (38) zu verhindern, und von dem der Ventilkörper (40) bei einlasseitigem Unterdurck abgehoben ist, um die Auslassöffnung (28) zu belüften,
dadurch gekennzeichnet, dass
- das Ventilsitzelement (60,60') faltfest ausgebildet ist, und
- der Ventilkörper (40) bei unterbrochenem Wasserfluss am Ventilsitzelement (60,60') unter Vorspannung anliegt, stromaufwärts des mit dem Ventilsitzelement (60,60') zusammenwirkenden Endabschnitts (54) eine umlaufende Sicke (52) aufweist, und
bei unterbrochenem Wasserfluss am Belüftungsventilsitz (56) mit einem stromaufwärts der Sicke (52) gelegenen Mittelabschnitt (50) anliegt um die Belüftungsöffnung (38) von der Auslassöffnung (28) abzutrennen, und ausschliesslich bei einlasseitigem Unterdruck vom Belüftungsventilsitz (56) zum Belüften der Auslassöffnung (28) abhebt.

2. Sicherungseinrichtung nach Anspruch 1, dadurch gekennzeichnet, dass das Ventilsitzelement (60,60') eine im wesentlichen zylinderförmige oder, in Strömungsrichtung (S) gesehen, sich konisch verjüngende, mit dem Endabschnitt (54) des Ventilkörpers (40) zusammenwirkende Dichtmantelfläche (62) aufweist.

3. Sicherungseinrichtung nach Anspruch 2, dadurch gekennzeichnet, dass das Ventilsitzelement (60') aus gummielastischem Material besteht und einen faltfesten Stützabschnitt (70) und einen daran anschliessenden weichen Dichtlippenabschnitt (68) aufweist an denen die Dichtmantelfläche (62) ausgebildet ist.

4. Sicherungseinrichtung nach einem der Ansprüche 1 bis 3, dadurch gekennzeichnet, dass das Ventilsitzelement (60,60') einen im Strömungskanal (42) verlaufenden Halteteil (58,58') aufweist, der auf der dem Endabschnitt (54) abgewandten Seite des Befestigungsendes (44) des Ventilkörpers (40) am Gehäuse (10) befestigt ist.

5. Sicherungseinrichtung nach einem der Ansprüche 1 bis 4, dadurch gekennzeichnet, dass der Ventilkörper (40) am Befestigungsende (44) einen umlaufenden Befestigungswulst (46) aufweist und der zwischen diesem und der Sicke (52) gelegene Mittelabschnitt (50), konisch geformt ist.

6. Sicherungseinrichtung nach einem der Ansprüche 1 bis 5, dadurch gekennzeichnet, dass der Ventilraum (14) zur Achse (12) des Ventilkörpers (40) im wesentlichen rotationssymmetrisch ausgebildet ist, und am Gehäuse (10) zwischen der Belüftungsöffnung (38) und der Auslassöffnung (28) der Belüftungsventilsitz (56) umlaufend angeformt ist.

7. Sicherungseinrichtung nach einem der Ansprüche 1 bis 6, dadurch gekennzeichnet, dass im Gehäuse (10) eine den Mittelabschnitt (50) des Ventilkörpers (40) umgebende Stütz- und Haltehülse (120) angeordnet ist, die im Bereich der Belüftungsöffnung (38) mit mindestens einem den Ventilraum (14) mit dem Belüftungskanal (36) verbindenden Schlitz (126) versehen ist.

8. Sicherungseinrichtung nach Anspruch 7, dadurch gekennzeichnet, dass die Stütz- und Haltehülse (120) über einen Bajonettverschluss (130) mit einem Deckelelement (20) des Gehäuses (10) verbunden ist.

9. Sicherungseinrichtung nach Anspruch 8, dadurch gekennzeichnet, dass der Ventilkörper (40) mit seinem Befestigungswulst (46) zusammen mit einem Aussenflansch (72') des Halteteils (58,58') zwischen einem inneren Absatz (136) der Stütz- und Haltehülse (120) und dem Deckelelement (20) festgeklemmt ist.

10. Sicherungseinrichtung nach einem der Ansprüche 7 bis 9, dadurch gekennzeichnet, dass die Stütz - und Haltehülse (120) auf ihrer der Auslassöffnung (28) zugewandten Stirnfläche (122) mit mehreren gleichmässig am Umfang verteilten, radial gerichteten Schlitzen (126) versehen ist.

11. Sanitärarmatur mit einem Armaturgehäuse (86,90), einer an diesem angeordneten, eingangsseitig mit einer Speiseleitung (94) zu verbinden bestimmten und ausgangsseitig über einen Ausströmkanal (30) mit einem Wasserabfluss (106) verbundenen Steuerpatrone (92) zum Einstellen der von der Speiseleitung (94) zum Wasserabfluss (106) fliessenden Wassermenge und gegebenefalls der Wassertemperatur, und einer Sicherungseinrichtung (84) nach einem der Ansprüche 1 bis 10, wobei der Ventilraum (14) der Sicherungseinrichtung (84) im Armaturgehäuse (86,90) angeordnet ist, und die Einlassöffnung (42) über einen am Armaturgehäuse (86,90) ausgebildeten ersten Abschnitt (94') des Ausströmkanals (30) mit der Steuerpatrone (92), die Auslassöffnung (28) über einen zweiten Abschnitt (98,100) des Ausströmkanals (30) mit dem Wasserabfluss (106) und die Belüftungsöffnung (38) über einen am Armaturgehäuse (86,90) ausgebildeten Belüftungskanal (36) mit der Umgebungsluft verbunden ist.

12. Sanitärarmatur nach Anspruch 11, gekennzeichnet durch eine den zweiten Abschnitt des Ausströmkanals bildende Schlauchbrause (82).

## Claims

1. Sanitary safety device, especially for a sanitary fitting, for preventing the backflow of water into a feed conduit, with
- a valve space (14) which is surrounded by a housing (10) and which has an inlet orifice (24) intended for connection to the feed conduit (94), an outlet orifice (28) and a ventilation orifice (38),
- a sleeve-shaped valve body (40) made of elastomeric material, which is arranged in the valve space (14) and which surrounds a flow channel (42) connected to the inlet orifice (24) and is fastened sealingly by means of its fastening end (44) to the housing (10),
- a valve-seat element (60, 60') which is arranged fixedly relative to the housing and round which the valve body (40) engages in a sleeve-like manner with its free end portion (54) remote from the fastening end .(44) and on which the valve body (40) bears with the end portion (54) when the water flow is interrupted and with a negative pressure prevailing on the inlet side, and from which the valve body (40) is spaced in the event of a water flow, and
- a ventilation-valve seat (56) which is fixed relative to the housing and on which the valve body (40) bears with its outer surface in the event of a water flow, in order to prevent water from flowing out through the ventilation orifice (38), and from which the valve body (40) is lifted off when negative pressure prevails on the inlet side, in order to ventilate the outlet orifice (28),
characterized in that
- the valve-seat element (60, 60') is of fold-resistant design, and
- the valve body (40) bears under prestress on the valve-seat element (60, 60') when the water flow is interrupted, has a continuous bead (52) upstream of the end portion (54) cooperating with the valve-seat element (60, 60'), and, when the water flow is interrupted, bears on the ventilation-valve seat (56) with a middle portion (50) located upstream of the bead (52), in order to separate the ventilation orifice (38) from the outlet orifice (28), and lifts off from the ventilation-valve seat (56) in order to ventilate the outlet orifice (28), only when negative pressure prevails on the inlet side.

2. Safety device according to Claim 1, characterized in that the valve-seat element (60, 60') has a sealing outer surface (62) which is essentially cylindrical or tapers conically, as seen in the direction of flow (S), and which cooperates with the end portion (54) of the valve body (40) .

3. Safety device according to Claim 2, characterized in that the valve-seat element (60') consists of elastomeric material and has a fold-resistant supporting portion (70) and a soft sealing-lip portion (68) adjoining the latter, on which supporting portion (70) and sealing-lip portion (68) the sealing outer surface (62) is formed.

4. Safety device according to one of Claims 1 to 3, characterized in that the valve-seat element (60, 60') has a holding part (58, 58') which extends in the flow channel (42) and which is fastened to the housing (10) on the side of the fastening end (44) of the valve body (40) facing away from the end portion (54).

5. Safety device according to one of Claims 1 to 4, characterized in that the valve body (40) has, at the fastening end (44), a continuous fastening bolster (46), and the middle portion (50) located between the latter and the bead (52) is of conical shape.

6. Safety device according to one of Claims 1 to 5, characterized in that the valve space (14) is made essentially rotationally symmetrical relative to the axis (12) of the valve body (40), and the ventilation-valve seat (56) is formed continuously on the housing (10) between the ventilation orifice (38) and the outlet orifice (28) .

7. Safety device according to one of Claims 1 to 6, characterized in that there is arranged in the housing (10) a supporting and holding sleeve (120) which surrounds the middle portion (50) of the valve body (40) and which is provided, in the region of the ventilation orifice (38), with at least one slot (126) connecting the valve space (14) to the ventilation channel (36).

8. Safety device according to Claim 7, characterized in that the supporting and holding sleeve (120) is connected to a cover element (20) of the housing (10) via a bayonet fastening (130).

9. Safety device according to Claim 8, characterized in that the valve body (40) is clamped by means of its fastening bolster (46), together with an outer flange (72') of the holding part (58, 58'), between an inner step (136) of the supporting and holding sleeve (120) and the cover element (20).

10. Safety device according to one of Claims 7 to 9, characterized in that the supporting and holding sleeve (120) is provided, on its end face (122) facing the outlet orifice (28), with a plurality of radially directed slots (126) which are distributed uniformly on the circumference.

11. Sanitary fitting with a fitting housing (86, 90), a control cartridge (92), which is arranged on the latter and is intended to be connected on the inlet side to a feed conduit (94) and which is connected on the outlet side to a water flow-off (106) via an outflow channel (30), for setting the water quantity flowing from the feed conduit (94) to the water flow-off (106) and, if appropriate, the water temperature, and a safety device (84) according to one of Claims 1 to 10, the valve space (14) of the safety device (84) being arranged in the fitting housing (86, 90), and the inlet orifice (42) being connected to the control cartridge (92) via a first portion (94'), formed on the fitting housing (86, 90), of the outflow channel (30), the outlet orifice (28) being connected to the water flow-off (106) via a second portion (98, 100) of the outflow channel (30), and the ventilation orifice (38) being connected to the ambient air via a ventilation channel (36) formed on the fitting housing (86, 90).

12. Sanitary fitting according to Claim 11, characterized in that there is a hose shower (82) forming the second portion of the outflow channel.

## Revendications

1. Dispositif de protection, notamment pour une robinetterie sanitaire, pour empêcher le reflux d'eau dans une conduite d'alimentation, avec
- une chambre de soupape (14), entourée par un boîtier (10), laquelle présente un orifice d'entrée (24) destiné à la liaison avec la conduite d'alimentation (94), un orifice de sortie (28) et un orifice de ventilation (38),
- un corps de soupape (40), en matière tel que le caoutchouc élastique, en forme de douille, disposé dans la chambre (14), lequel entoure un canal d'écoulement, (42) relié avec l'orifice d'entrée (24) et est lié hermétiquement au boîtier (10) par son extrémité de fixation (44),
- un siège de soupape (60, 60'), fixé à demeure sur le boîtier, lequel est entouré à la manière d'une manchette par la section d'extrémité (54) libre du corps (40), éloignée de l'extrémité de fixation et sur lequel repose le corps (40) par sa section d'extrémité (54) lorsque le courant d'eau est interrompu et en cas de dépression du côté de l'entrée, et duquel le corps (40) est éloigné en présence d'un courant d'eau, et
- un siège d'une soupape de ventilation (56), fixé à demeure sur le boîtier, sur lequel repose le corps (40) avec sa surface d'enveloppe extérieure en contact avec le courant d'eau afin d'empêcher l'écoulement à travers l'orifice de ventilation (38), et duquel le corps de soupape (40) est soulevé en cas de dépression du côté de l'entrée, afin de ventiler l'orifice de sortie (28),
caractérisé par le fait que
- le siège de soupape (60, 60') est réalisé de manière à ne pas se plisser, et
- le corps de soupape (40) est soumis à une précontrainte lorsque le courant d'eau est interrompu au niveau du siège (60, 60'), présente une moulure (52) périphérique, en amont de la section d'extrémité (54), agissant conjointement avec le siège (60, 60') et, en cas d'interruption du courant d'eau, repose sur le siège de la soupape de ventilation (56) par une section centrale (50), se trouvant en amont de la moulure (52), afin d'isoler l'orifice de ventilation (38) de l'orifice d'écoulement (28), et se soulève de ce siège de la soupape de ventilation (56) afin de ventiler l'orifice d'écoulement (28), exclusivement en cas de dépression du côté de l'entrée.

2. Dispositif de protection selon la revendication 1, caractérisé par le fait que le siège de soupape (60, 60') présente une surface d'enveloppe étanche (62), essentiellement de forme cylindrique ou, vue dans le sens d'écoulement (S), de forme conique effilée, agissant conjointement avec la section d'extrémité (54) du corps de soupape (40).

3. Dispositif de protection selon la revendication 2, caractérisé par le fait que le siège de soupape (60') est en matière telle que le caoutchouc élastique, et présente une section de support (70) qui ne se plisse pas, ainsi qu'une section lèvre d'étanchéité (68) molle qui vient s'y raccorder et sur laquelle est formée la surface d'enveloppe étanche (62).

4. Dispositif de protection selon l'une des revendications 1 à 3, caractérisé par le fait que le siège de soupape (60, 60') présente une pièce de maintien (58, 58'), s'étendant dans le canal d'écoulement (42), laquelle est fixée sur le boîtier (10) du côté de l'extrémité de fixation (44) du corps (40), opposé à la section d'extrémité (54).

5. Dispositif de protection selon l'une des revendications 1 à 4, caractérisé par le fait que le corps de soupape (40) présente un bourrelet de fixation (46) périphérique sur l'extrémité de fixation (44) et que la section centrale (50), qui se trouve entre celui-ci et la moulure (52), est de forme conique.

6. Dispositif de protection selon l'une des revendications 1 à 5, caractérisé par le fait que la chambre de soupape (14) est réalisée essentiellement avec une symétrie de rotation par rapport à l'axe (12) du corps de soupape (40), et en ce que le siège de la soupape de ventilation (56) est de forme périphérique sur le boîtier (10), entre l'orifice de ventilation (38) et l'orifice d'écoulement (28).

7. Dispositif de protection selon l'une des revendications 1 à 6, caractérisé par le fait que qu'une douille de support et de maintien (120), entourant la section centrale (50) du corps (40), est disposée dans le boîtier (10), laquelle est munie dans la zone de l'orifice de ventilation (38) d'au moins une rainure (126), reliant la chambre (14) au canal de ventilation (36) .

8. Dispositif de protection selon la revendication 7, caractérisé par le fait que la douille du support et de maintien (120) est reliée à un élément de couverture (20) du boîtier (10), par le biais d'un emboîtement à baïonnette (130).

9. Dispositif de protection selon la revendication 8, caractérisé par le fait que le corps de soupape (40) est serré par son bourrelet de fixation (46) en même temps qu'une bride extérieure (72') de la pièce de maintien (58, 58'), entre un talon (136) intérieur de la douille de support et de maintien (120) et l'élément de couverture (20).

10. Dispositif de protection selon l'une des revendications 7 à 9, caractérisé par le fait que la douille de support et de maintien (120) est munie, sur sa surface frontale (122) faisant face à l'orifice d'écoulement (28), de plusieurs rainures (126), dirigées dans le sens radial et réparties uniformément sur son pourtour.

11. Robinetterie sanitaire avec un boîtier de robinetterie (86, 90), une cartouche de commande (92) disposée sur celui-ci, destinée à être raccordée à une conduite d'alimentation (94) côté entrée et reliée à une évacuation d'eau (106) côté sortie, par le biais d'un canal d'écoulement (30), destinée à régler la quantité d'eau et, le cas échéant, la température de l'eau s'écoulant de la conduite d'alimentation (94) vers l'évacuation d'eau (106), et un dispositif de protection (84) selon l'une des revendications 1 à 10, la chambre de soupape (14) du dispositif de protection (84) étant disposée dans le boîtier de robinetterie (86, 90), l'orifice d'entrée (42) étant relié à la cartouche de commande (92) par le biais d'une première section (94') du canal d'écoulement (30), formée sur le boîtier (86, 90), l'orifice de sortie (28) étant relié à l'évacuation d'eau (106) par le biais d'une deuxième section (98, 100) du canal d'écoulement (30), l'orifice de ventilation (38) étant relié à l'air ambiant par le biais d'un canal de ventilation (36), formé sur le boîtier (86, 90).

12. Robinetterie sanitaire selon la revendication 11, caractérisé par une douchette à tuyau (82), formant la deuxième section du canal d'écoulement.
